# EUROPEAN PATENT SPECIFICATION

(11) **EP 4 098 104 B1**
(45) Date of publication and mention of the grant of the patent: **07.05.2025**
(21) Application number: 21208717.5
(22) Date of filing: 17.11.2021
(51) Int. Cl.: A01G 9/22, A01G 9/14

(54) **RADIATION COOLING FILM PROVIDING A VARIABLE WAVELENGTH AND WAVELENGTH CONVERSION DEVICE AND SYSTEM USING THE SAME**
STRAHLUNGSKÜHLFILM MIT VARIABLER WELLENLÄNGE UND WELLENLÄNGENUMWANDLUNGSVORRICHTUNG UND -SYSTEM DAMIT
FILM DE REFROIDISSEMENT PAR RAYONNEMENT FOURNISSANT UNE LONGUEUR D'ONDE VARIABLE ET DISPOSITIF ET SYSTÈME DE CONVERSION DE LONGUEUR D'ONDE L'UTILISANT

(30) Priority: 01.06.2021 KR 20210070534
(43) Date of publication of application: 07.12.2022
(73) Proprietor: Sherpa Space Inc., Daejeon 34051 (KR)
(72) Inventor: YUN, Choa Mun, Yuseong-gu (KR)
(74) Representative: Schmitt-Nilson Schraud Waibel Wohlfrom Patentanwälte Partnerschaft mbB

(56) References cited:
- EP-A1- 3 544 063
- US-A1- 2017 288 080
- US-A1- 2019 284 471

## Description

### BACKGROUND OF THE INVENTION

### Field of the Invention

The present invention relates to a radiative cooling film providing a variable wavelength and a wavelength conversion device and system using the same, and more particularly to a radiative cooling film providing a variable wavelength which determines a solar heat shielding rate depending on the inner temperature of a facility and varies a wavelength conversion section of the film exposed to sunlight so as to radiate a necessary wavelength depending on the growth stage of plants, and a wavelength conversion device and system using the same.

### PROJECT INFORMATION

- PROJECT SERIAL NO.: 1415174708
- PROJECT NO.: 20212020800050
- RELEVANT MINISTRY: Korea Ministry of Trade, Industry and Energy
- RESEARCH AND MANAGEMENT INSTITUTE: Korea Institute of Energy Technology Evaluation and Planning
- RESEARCH PROJECT NAME: Core Technology Development for Energy Demand Management
- RESEARCH SUBJECT NAME: Development and Demonstration of Rooftop Greenhouse-type Smart Green Building Convergence and Fusion System Based on Multi-distributed Power Generation
- CONTRIBUTION RATE: 100%
- PROJECT EXECUTION ORGANIZATION: Sherpa Space Inc.
- RESEARCH PERIOD: 2020. 5. 1 ~ 2025. 12. 31

### Description of the Related Art

In general, plants receive energy through light, and grow through photosynthesis and respiration. Vegetative growth and reproductive growth of plants are influenced by the length of day and the photosynthetic photon flux (PPF), and growth of plants varies depending on wavelengths. Plants undergo photosynthesis in the wavelength range of 380-760 nm including the range of visible light, and radiant energy in the wavelength range in which photosynthesis occurs is referred to as photosynthetically active radiation (PAR). Plants require different wavelengths and PPFs, respectively. Therefore, it is very important to secure light necessary for crop growth in a greenhouse or a plant factory.

When it is difficult to secure light sources, artificial light sources are installed so as to induce growth and development of crops, but the artificial light sources consume a huge amount of power and cause high maintenance expenses of a facility.

Therefore, use of sunlight is the most efficient to cultivate crops but, in a facility using sunlight, it is difficult to artificially determine the amount of radiation of sunlight or to artificially vary a wavelength range radiated from sunlight.

For example, when the amount of incident sunlight is large at noon, the indoor temperature of the facility is higher than a proper temperature and thus requires operation of a cooling system configured to lower the indoor temperature, and thereby, the amount of electricity used is increased.

Korean Patent Unexamined Publication No. 10-2015-0113457 discloses technology related to a plant cultivation apparatus with artificial light sources for plant factories. This technology may provide light sources necessary for plants, but cannot adjust the inner temperature of a facility and thus cannot expect effective management of cooling and heating costs.

US 2019/284471 A1 discloses a wavelength conversion film which utilizes photostable organic chromophores, comprising luminescent compounds which is useful for improving the solar harvesting efficiency of solar cells, solar panels, or photovoltaic devices.

EP 3 544 063 A1 discloses a sunlight converting device including a wavelength converting film using a wavelength conversion material such as a quantum dot or an inorganic phosphor,

US 2017/288080 A1 discloses a window for a greenhouse that is comprised of a sheet of luminescent material and light-energy converter.

### RELATED ART DOCUMENT

### PATENT DOCUMENT

Korean Patent Unexamined Publication No. 10-2015-0113457 (October 08, 2015)

### SUMMARY OF THE INVENTION

Therefore, the present invention has been made in view of the above problems, and it is an object of the present invention to provide a radiative cooling film providing a variable wavelength which determines a solar heat shielding rate depending on the inner temperature of a facility and varies a wavelength conversion section of the film exposed to sunlight so as to radiate a necessary wavelength depending on the growth stage of plants, and a wavelength conversion device and system using the same.

The present invention is defined in the independent claims and various aspects of the invention are disclosed in the dependent claims, the description, and the drawings.

In accordance with an aspect of the present invention, the above and other objects can be accomplished by the provision of a radiative cooling film providing a variable wavelength, wherein one surface of a base layer includes a first region provided with a heat barrier layer formed therein and a second region not provided with the heat barrier layer, and a wavelength conversion layer including a plurality wavelength conversion sections divided from each other is formed in each of the first region and the second region.

The wavelength conversion sections may be repeatedly formed in the same manner in the first region and the second region.

The wavelength conversion sections may be formed on a remaining surface of the base layer.

The wavelength conversion sections may be formed on the surface of the base layer provided with the heat barrier layer formed thereon.

The first region may include a plurality of heat barrier sections having different heat shielding rates and, in this case, the wavelength conversion sections may be repeatedly formed in the same manner in the respective heat barrier sections and the second region.

The first region and the second region may be alternately repeatedly arranged, and one wavelength conversion section configured to radiate the same wavelength may be arranged throughout the first region and the second region adjacent to each other.

In accordance with another aspect of the present invention, there is provided a wavelength conversion device providing a variable wavelength, including a radiative cooling film configured such that one surface of a base layer includes a first region provided with a heat barrier layer formed therein and a second region not provided with the heat barrier layer, and a wavelength conversion layer including a plurality wavelength conversion sections divided from each other is formed in each of the first region and the second region, and a driving unit including two rollers configured to wind both ends of the radiative cooling film, a motor configured to apply rotational force to at least one of the rollers, and a controller configured to control an RPM and a direction of rotation of the motor.

In accordance with yet another aspect of the present invention, there is provided a wavelength conversion system providing a variable wavelength, including a wavelength conversion device including a radiative cooling film configured such that one surface of a base layer includes a first region provided with a heat barrier layer formed therein and a second region not provided with the heat barrier layer, and a wavelength conversion layer including a plurality wavelength conversion sections divided from each other is formed in each of the first region and the second region, and a driving unit including two rollers configured to wind both ends of the radiative cooling film, a motor configured to apply rotational force to at least one of the rollers, and a controller configured to control an RPM and a direction of rotation of the motor, a temperature sensor installed in a facility, and a management server configured to control the wavelength conversion device so that sunlight is radiated to one of the wavelength conversion sections of the first region when a value measured by the temperature sensor is greater than a threshold value.

The wavelength conversion system may further include a camera configured to photograph living bodies to be grown in the facility, and the management server may include an analyzing module configured to determine a growth stage of the living bodies to be grown based on image data transmitted by the camera, and an indicating module configured to determine one of the first region and the second region based on the value measured by the temperature sensor and to control the wavelength conversion device so that sunlight is radiated to one of the wavelength conversion sections of the determined region so as to emit a necessary wavelength depending on the determined growth stage.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a structural diagram of a radiative cooling film according to a first embodiment of the present invention;
FIG. 2 is a structural diagram of a radiative cooling film according to a second embodiment of the present invention;
FIG. 3 is a structural diagram of a radiative cooling film according to a third embodiment of the present invention;
FIG. 4 is a structural diagram of a radiative cooling film according to a fourth embodiment of the present invention;
FIG. 5 is a structural diagram of a radiative cooling film according to a fifth embodiment of the present invention;
FIG. 6 is a structural diagram of a radiative cooling film according to a sixth embodiment of the present invention;
FIG. 7 is a structural diagram of a radiative cooling film according to a seventh embodiment of the present invention;
FIG. 8 is a block diagram of a wavelength conversion device according to an eighth embodiment of the present invention;
FIG. 9 is a view illustrating the configuration of a wavelength conversion system according to a ninth embodiment of the present invention; and
FIG. 10 is a block diagram of a management server of the wavelength conversion system according to the ninth embodiment of the present invention.

### DETAILED DESCRIPTION OF THE INVENTION

Hereinafter reference will be made in detail to exemplary embodiments of the present invention, examples of which are illustrated in the accompanying drawings. However, it will be understood that the embodiments of the present invention are provided only to completely disclose the invention and cover modifications, equivalents or alternatives which come within the scope and technical range of the invention.

In the following description of the embodiments, singular forms may be intended to include plural forms as well, unless the context clearly indicates otherwise.

In the following description of the embodiments, it will be understood that, when a part "has" or "comprises" an element, the part may further include other elements, and does not exclude the presence of such other elements, unless stated otherwise.

In the following description of the embodiments, it will be understood that the terms "...unit", "...module" and "...component" indicate units for processing at least one function or operation, and may be implemented using hardware, software or a combination of hardware and software.

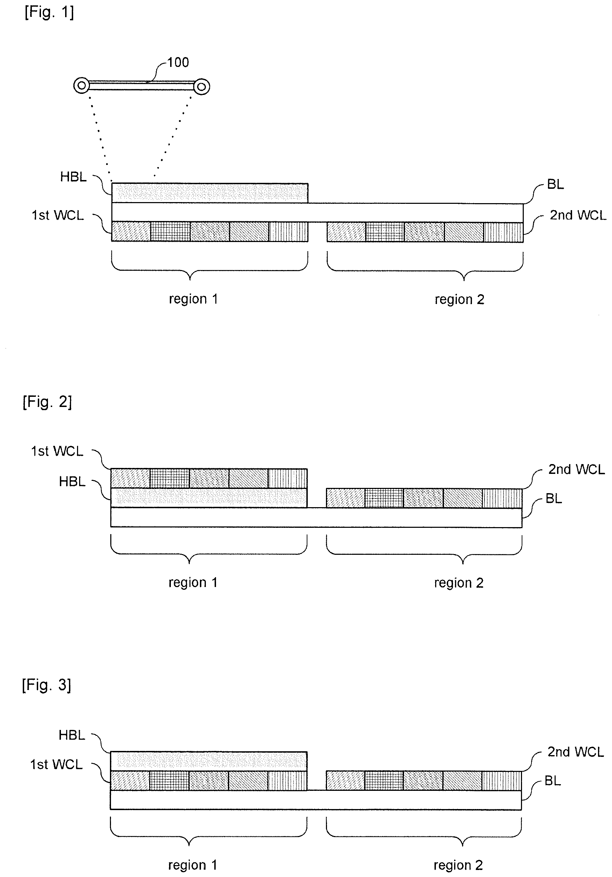

FIG. 1 is a structural diagram of a radiative cooling film according to a first embodiment of the present invention.

The radiative cooling film according to the first embodiment includes a base layer BL, a heat barrier layer HBL and a wavelength conversion layer WCL.

One surface of the base layer BL is coated with the heat barrier layer HBL, and thus, the base layer BL supports and protects the heat barrier layer HBL.

The base layer BL may be formed of one of polyethylene terephthalate (PET), polycarbonate, nylon, polypropylene (PP), polyethylene naphthalate (PEN) and polyamide.

The base layer BL includes a first region, i.e., a region 1, in which the heat barrier layer HBL is formed, and a second region, i.e., a region 2, in which the heat barrier layer HBL is not formed. The region 1 and the region 2 may have the same area.

The heat barrier layer HBL is coated on one surface of the base layer BL, and prevents radiant heat from being introduced into the base layer BL or being emitted from the base layer BL. The heat barrier layer HBL may include at least one of polydimethylsiloxane (PDMS), silicon dioxide (SiO₂) and silver (Ag) so as to reflect infrared light. However, the heat barrier layer HBL is not limited to these compositions, and may employ any composition which may reflect the infrared band.

The wavelength conversion layer WCL converts the wavelength of sunlight and then outputs the converted wavelength so as to radiate a wavelength of sunlight necessary depending on the growth stage of living bodies to be grown. The living bodies to be grown may be one of plants and algae.

The wavelength conversion layer WCL is formed on another surface of the base layer BL, and is formed in the region 1 and the region 2 of the base layer BL.

The wavelength conversion layer WCL has a plurality of wavelength conversion sections which are divided from each other.

The respective wavelength conversion sections in the region 1 and the region 2 have different wavelength shift characteristics. In order to shift wavelengths, one wavelength conversion material of quantum dots, perovskites, phosphors and cellophane may be used.

For example, the wavelength conversion sections may include a section A including quantum dots configured to emit red light, a section B configured to intactly output sunlight, a section C configured to block sunlight, a section D including quantum dots configured to emit blue light, and a section E including quantum dots configured to emit green light. The wavelength configuration and the order of arrangement of the wavelength conversion sections are not limited to the above example, but may vary depending on a designer or the kind of the living bodies to be grown. Further, although this embodiment describes five wavelength conversion sections, the number of the wavelength conversion sections may be less than five or may exceed five.

The wavelength conversion sections are repeated in the same manner in the region 1 and the region 2. That is, the wavelength conversion sections are arranged to have the same wavelength configuration in the same order in the region 1 and the region 2.

The wavelength conversion sections may be provided in different manners in the region 1 and the region 2. For example, the region 1 provided with the heat barrier layer HBL formed therein may employ A-type wavelength conversion sections for crops which grow well in normal weather or cool weather, and the region 2 not provided with the heat barrier layer HBL may employ B-type wavelength conversion sections for crops which grow well in hot weather.

FIG. 2 is a structural diagram of a radiative cooling film according to a second embodiment of the present invention.

In the radiative cooling film according to the second embodiment, both a wavelength conversion layer WCL and a heat transfer layer HBL are formed on one surface, i.e., on the same surface, of a base layer BL.

The base layer BL, the heat barrier layer HBL and the wavelength conversion layer WCL are sequentially stacked in a region 1 in which the heat barrier layer HBL is formed, and the base layer BL and the wavelength conversion layer WCL are sequentially stacked in a region 2 in which the heat barrier layer HBL is not formed.

A plurality of wavelength conversion sections of the wavelength conversion layer WCL may be formed in the same manner in the region 1 and the region 2, or may be formed in different manners in the region 1 and the region 2.

FIG. 3 is a structural diagram of a radiative cooling film according to a third embodiment of the present invention.

In the radiative cooling film according to the third embodiment, both a wavelength conversion layer WCL and a heat transfer layer HBL are formed on one surface, i.e., on the same surface, of a base layer BL.

The base layer BL, the wavelength conversion layer WCL and the heat barrier layer HBL are sequentially stacked in a region 1 in which the heat barrier layer HBL is formed, and the base layer BL and the wavelength conversion layer WCL are sequentially stacked in a region 2 in which the heat barrier layer HBL is not formed.

A plurality of wavelength conversion sections of the wavelength conversion layer WCL may be formed in the same manner in the region 1 and the region 2, or may be formed in different manners in the region 1 and the region 2.

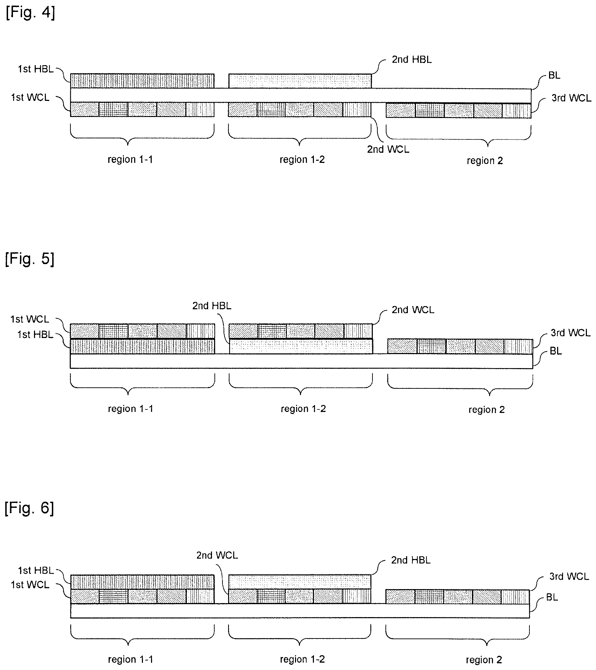

FIG. 4 is a structural diagram of a radiative cooling film according to a fourth embodiment of the present invention.

In the radiative cooling film according to the fourth embodiment, a heat barrier layer HBL include a plurality of heat barrier sections configured to have different heat shielding rates and formed on one surface of a base layer BL in a region 1.

Here, two or more heat barrier sections may be formed, and the fourth embodiment describes that two heat barrier sections (i.e., a first heat barrier section and a second heat barrier section) are formed. The first heat barrier section having a heat shielding rate A is formed in a region 1-1, and the second heat barrier section having a heat shielding rate B is formed in a region 1-2.

For example, the first heat barrier section in the region 1-1 may be configured to have a heat shielding rate of 70%, and the second heat barrier section in the region 1-2 may be configured to have a heat shielding rate of 40%.

Further, for example, the first heat barrier section in the region 1-1 may be used in summer, the second heat barrier section in the region 1-2 may be used in spring and fall, and the region 2 may be used in winter.

In addition, for example, the first heat barrier section in the region 1-1 may be used at noon, the second heat barrier section in the region 1-2 may be used in time zones before and after noon, and the region 2 may be used at sunrise and at sunset.

A wavelength conversion layer WCL is formed on another surface of the base layer BL opposite the heat barrier layer HBL.

A plurality of wavelength conversion sections of the wavelength conversion layer WCL may be repeatedly formed in the same manner in the heat barrier sections in the region 1-1 and the region 1-2 of the region 1 and the region 2. The region 1-1, the region 1-2 and the region 2 may have the same area, or may have different areas.

FIG. 5 is a structural diagram of a radiative cooling film according to a fifth embodiment of the present invention.

In the radiative cooling film according to the fifth embodiment, a heat barrier layer HBL and a wavelength conversion layer WCL are sequentially stacked on a base layer BL in a region 1-1 and a region 1-2, and the heat barrier layer HBL includes heat barrier sections configured to have different heat shielding rates and formed in the region 1-1 and the region 1-2, respectively. The wavelength conversion layer WCL is stacked on the base layer BL in a region 2.

A plurality of wavelength conversion sections of the wavelength conversion layer WCL may be repeatedly formed in the same manner in the region 1-1, the region 1-2 and the region 2, and the wavelength conversion sections may be formed in a different manner in at least one of the region 1-1, the region 1-2 and the region 2.

FIG. 6 is a structural diagram of a radiative cooling film according to a sixth embodiment of the present invention.

In the radiative cooling film according to the sixth embodiment, a wavelength conversion layer WCL is stacked in a base layer BL in a region 1-1, a region 1-2 and a region 2, and a heat barrier layer HBL is stacked on the wavelength conversion layer WCL in the region 1-1 and the region 1-2. Further, the heat barrier layer HBL includes heat barrier sections configured to have different heat shielding rates and formed in the region 1-1 and the region 1-2, respectively.

A plurality of wavelength conversion sections of the wavelength conversion layer WCL may be repeatedly formed in the same manner in the region 1-1, the region 1-2 and the region 2, and the wavelength conversion sections may be formed in a different manner in at least one of the region 1-1, the region 1-2 and the region 2.

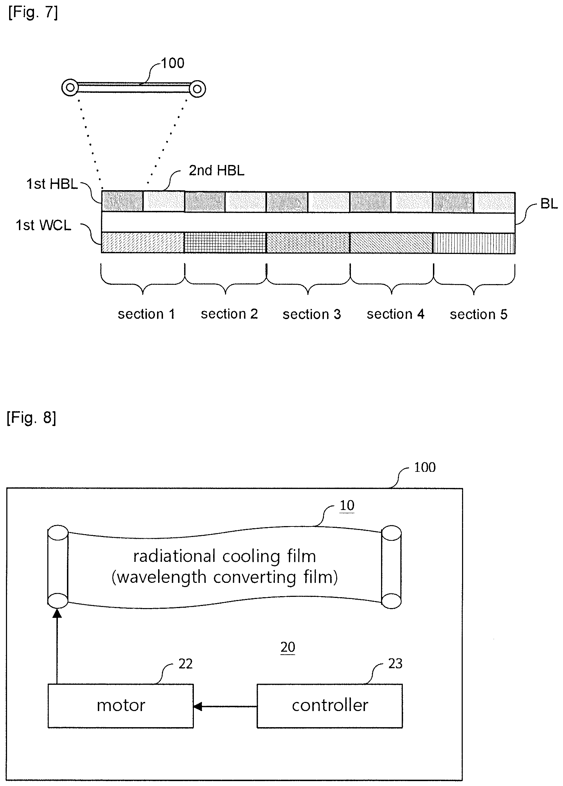

FIG. 7 is a structural diagram of a radiative cooling film according to a seventh embodiment of the present invention.

In the radiative cooling film according to the seventh embodiment, a heat barrier layer is provided on one surface of a base layer BL such that a first heat barrier section 1^{st} HBL and a second heat barrier section 2^{st} HBL are alternately repeatedly arranged, and a wavelength conversion layer is provided on another surface of the base layer BL such that one wavelength conversion section configured to radiate the same wavelength is arranged throughout the first heat barrier section 1^{st} HBL and the second heat barrier section 2^{st} HBL adjacent to each other.

That is to say, the radiative cooling film according to the seventh embodiment is configured such that a plurality of heat barrier sections having different heat shielding rates is arranged in each of the wavelength conversion sections, i.e., sections 1 to 5, of the wavelength conversion layer WCL.

As an example, the heat barrier layer HBL divided into a heat barrier section and a heat transmission section may be formed in one wavelength conversion section configured to radiate the same wavelength. As another example, the heat barrier layer HBL divided into a heat barrier section having a heat shielding rate A, a heat barrier section having a heat shielding rate B and a heat transmission section may be formed in one wavelength conversion section configured to radiate the same wavelength.

FIG. 7 illustrates an embodiment in which the wavelength conversion layer WCL is formed on one surface of the base layer BL and the heat barrier layer HBL is formed on another surface of the base layer BL. Although not shown in this figure, the wavelength conversion layer WCL and the heat barrier layer HBL may be sequentially stacked or the heat barrier layer HBL and the wavelength conversion layer WCL may be sequentially stacked on one surface of the barrier layer BL.

Further, although the FIG. 7 exemplarily illustrates that the wavelength conversion layer WCL is divided into five wavelength conversion sections, i.e., the sections 1 to 5, wavelength conversion layer WCL is not limited thereto, and the number of the wavelength conversion sections may be less than five or may exceed five.

In an area having a great temperature difference between day and night, such as a desert, the radiative cooling film needs to change the heat barrier sections having different heat shielding rates several times a day. Further, the growth stage of living bodies to be grown is not changed in just a day or two, and thus, it may not be necessary to change the heat barrier sections. Therefore, when the heat barrier sections having different heat shielding rates are disposed adjacent to each other in one wavelength conversion section configured to radiate the same wavelength as described in the seventh embodiment, the moving distance of the radiative cooling film is short compared to the first to sixth embodiments, and thus, re-arrangement of the radiative cooling film may be rapidly performed and consumption of electrical energy due to movement of the radiative cooling film may be minimized.

FIG. 8 is a block diagram of a wavelength conversion device according to an eighth embodiment of the present invention.

A wavelength conversion device 100 according to the eighth embodiment includes a radiative cooling film 10 and a driving unit 20.

As the radiative cooling film 10, any one of the above-described radiative cooling films according to the first to seventh embodiments may be employed. Therefore, a detailed description of the radiation cooling film 10 will be omitted.

The driving unit 20 may vary the section of the radiative cooling film 10, upon which sunlight is incident, by winding both ends of the radiative cooling film 10 on two rollers 21 and then rotating at least one of the two rollers 21.

The driving unit 20 includes the two rollers 21, a motor 22 and a controller 23.

The wavelength conversion device 100 may be installed on the roof of a facility or in a window formed in the side wall of the facility.

One end of the radiative cooling film 10 is wound on any one of the rollers 21. The two rollers 21 are rotated in the same direction, i.e., in a regular direction or the reverse direction, so as to vary the section of the radiative cooling film 10, upon which sunlight is incident.

The motor 22 is connected to at least one of the two rollers 21, and applies rotational force to the roller 21 to which the motor 22 is connected. The motor 22 may employ one of an AC motor, a BLDC motor and a DC motor.

The controller 23 controls the RPM and the direction of rotation of the motor 22. The controller 23 changes the section of the radiative cooling film 10, to which sunlight is radiated, in response to a control signal transmitted by a management server.

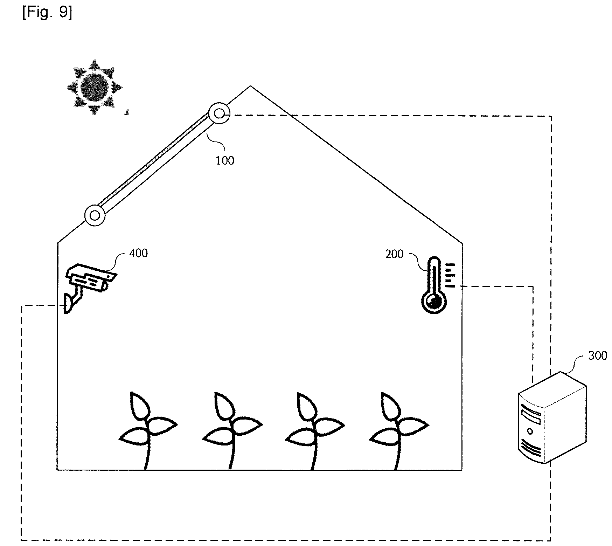

FIG. 9 is a view illustrating the configuration of a wavelength conversion system according to a ninth embodiment of the present invention.

The wavelength conversion system according to the ninth embodiment includes a wavelength conversion device 100, a temperature sensor 200 and a management server 300, and may further include a camera 400.

The wavelength conversion device 100 is the same as the wavelength conversion device 100 according to the eighth embodiment, and a detailed description thereof will thus be omitted.

The temperature sensor 200 is installed in a facility, and measures the inner temperature of the facility periodically or in real time.

The management server 300 compares a value measured by the temperature sensor 200 with a threshold value, and determines any one of the heat barrier sections of the radiative cooling film based on a result of the comparison. Then, the management server 300 transmits a control signal to move the radiative cooling film so that sunlight is radiated to a wavelength conversion section configured to emit a wavelength matching the growth stage of the living bodies to be grown, among the wavelength conversion sections arranged in the determined heat barrier section.

The camera 400 is installed in the facility. The camera 400 photographs the living bodies to be grown in the facility, and transmits photographed image data to the management server 300.

The temperature sensor 200 and the camera 400 may communicate with the management server 300 through communication modules (not shown) respectively provided therein, or may communicate with the management server 300 through a communication terminal, such as a set-top box connected thereto. Further, the temperature sensor 200 and the camera 4000 may communicate with the management server 300 or the set-top box by wire or wirelessly.

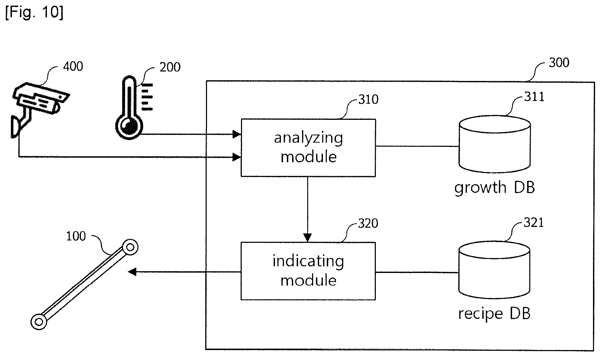

FIG. 10 is a block diagram of the management server 300 of the wavelength conversion system according to the ninth embodiment of the present invention.

The management server 300 according to the ninth embodiment includes an analyzing module 310, a growth database 311, an indicating module 320 and a recipe database 321.

The analyzing module 310 compares the measured value transmitted by the temperature sensor 200 with the threshold value, and determines any one of the heat barrier sections of the radiative cooling film based on a result of the comparison. For example, when the radiative cooling film is divided into a heat barrier section and a heat transmission section and the indoor temperature measured by the temperature sensor 200 is higher than the threshold value, the analyzing module 310 of the management server 300 may determine the heat barrier section as a section, to which sunlight is radiated, in order to lower the indoor temperature.

Further, the analyzing module 310 determines the growth stage of the living bodies to be grown by analyzing photographed image data transmitted by the camera 400, and determines a wavelength conversion section matching the growth stage of the living bodies to be grown.

For example, the analyzing module 310 may compare the photographed image data with growth data of plants stored in the growth database 311, and may determine the growth stage of the living bodies to be grown based on at least one of the height, the leaf size, the leaf color and the number of leaves of the living bodies to be grown, and whether or not there are fruits of the living bodies to be grown.

The growth database 311 stores data indicating the growth stage of the living bodies to be grown. For example, the growth database 311 may store images regarding the irreversible change in the size of the living bodies to be grown over time. In case of plants, the growth database 311 may store information regarding the height, the leaf size, the leaf color and the number of leaves of the plants, and whether or not there are fruits of the plants in the germination stage, the initial growth stage, the flowering stage, the fruiting stage, etc. of the plants.

The indicating module 320 receives identification information of the heat barrier section and the wavelength conversion section determined by the analyzing module 310. Further, the indicating module 320 transmits a control signal to move the radiative cooling film so that sunlight is radiated to the heat barrier section and the wavelength conversion section corresponding to the received information, to the wavelength conversion device 100.

The recipe database 321 stores necessary wavelength information depending on the growth stage of the living bodies to be grown. For example, the recipe database 321 may store necessary wavelength information in the germination stage, the initial growth stage, the flowering stage, the fruiting stage, etc. of the plants.

As is apparent from the above description, the present invention provides a radiative cooling film providing a variable wavelength which determines a solar heat shielding rate depending on the inner temperature of a facility and varies a wavelength conversion section of the film exposed to sunlight so as to radiate a necessary wavelength depending on the growth stage of plants, and a wavelength conversion device and system using the same, thereby being capable of saving cooling and heating costs used in the facility and promoting growth of the plants.

## Claims

1. A radiative cooling film (10) for providing a variable wavelength, comprising:
a base layer (BL) comprising a first region provided with a heat barrier layer (HBL) formed on a first surface thereof and a second region not provided with a heat barrier layer, the heat barrier layer (HBL) preventing radiant heat from being introduced into the base layer (BL) or being emitted from the base layer (BL);
a first wavelength conversion layer (1st WCL) formed in the first region of the base layer (BL), the first wavelength conversion layer (1st WCL) comprising a first plurality wavelength conversion sections which are divided from each other and have different wavelength shift characteristics; and
a second wavelength conversion layer (2nd WCL) formed in the second region of the base layer (BL), the second wavelength conversion layer (2nd WCL) comprising a second plurality wavelength conversion sections which are divided from each other and have different wavelength shift characteristics.

2. The radiative cooling film according to claim 1, wherein the the first and second plurality of wavelength conversion sections are repeatedly formed in the same manner in the first region and the second region, respectively.

3. The radiative cooling film according to claim 1 or 2, wherein the first and second wavelength conversion layers (1st and 2nd WCLs) are formed on a second surface of the base layer (BL).

4. The radiatiivel cooling film according to claim 1 or 2, wherein the first and second wavelength conversion layers (1st and 2nd WCLs) are formed on the first surface of the base layer (BL).

5. The radiative cooling film according to any of the preceding claims, wherein the heat barrier layer (HBL) formed in the first region comprises a plurality of heat barrier sections having different heat shielding rates.

6. The radiative cooling film according to claim 5, wherein the wavelength conversion sections are repeatedly formed in the same manner in the respective heat barrier sections and the second region.

7. The radiative cooling film according to any of the preceding claims, wherein:
the first region and the second region are alternately repeatedly arranged; and
one wavelength conversion section configured to radiate the same wavelength is arranged throughout the first region and the second region adjacent to each other.

8. A wavelength conversion device (100) providing a variable wavelength, comprising:
a radiative cooling film (10) according to any of the preceding claims; and
a driving unit (20) comprising two rollers configured to wind both ends of the radiative cooling film (10), a motor (22) configured to apply rotational force to at least one of the rollers, and a controller (23) configured to control an RPM and a direction of rotation of the motor (22).

9. A wavelength conversion system providing a variable wavelength, comprising:
a wavelength conversion device (100) according to claim 8;
a temperature sensor (200) installed in a facility; and
a management server (300) configured to control the wavelength conversion device (100) so that sunlight is radiated to one of the wavelength conversion sections of the first region when a value measured by the temperature sensor is greater than a threshold value.

10. The wavelength conversion system according to claim 9, further comprising a camera (400) configured to photograph living bodies to be grown in the facility,
wherein the management server (300) comprises an analyzing module (310) configured to determine a growth stage of the living bodies to be grown based on image data transmitted by the camera (400), and an indicating module (320) configured to determine one of the first region and the second region based on the value measured by the temperature sensor (200) and to control the wavelength conversion device (100) so that sunlight is radiated to one of the wavelength conversion sections of the determined region so as to emit a necessary wavelength depending on the determined growth stage.

## Patentansprüche

1. Strahlungskühlfilm (10) zur Bereitstellung einer variablen Wellenlänge, aufweisend:
eine Basisschicht (BL) mit einer ersten Region, die mit einer auf einer ersten Oberfläche derselben ausgebildeten Wärmebarriereschicht (HBL) versehen ist, und mit einer zweiten Region, die nicht mit einer Wärmebarriereschicht versehen ist, wobei die Wärmebarriereschicht (HBL) verhindert, dass Strahlungswärme in die Basisschicht (BL) eingebracht oder von der Basisschicht (BL) abgegeben wird;
eine erste Wellenlängenumwandlungsschicht (1st WCL), die in der ersten Region der Basisschicht (BL) gebildet ist, wobei die erste Wellenlängenumwandlungsschicht (1st WCL) eine erste Mehrzahl von Wellenlängenumwandlungsabschnitten aufweist, die voneinander getrennt sind und unterschiedliche Wellenlängenverschiebungseigenschaften aufweisen; und
eine zweite Wellenlängenumwandlungsschicht (2nd WCL), die in der zweiten Region der Basisschicht (BL) gebildet ist, wobei die zweite Wellenlängenumwandlungsschicht (2nd WCL) eine zweite Mehrzahl von Wellenlängenumwandlungsabschnitten aufweist, die voneinander getrennt sind und unterschiedliche Wellenlängenverschiebungseigenschaften aufweisen.

2. Strahlungskühlfilm nach Anspruch 1,
wobei die erste und die zweite Mehrzahl von Wellenlängenumwandlungsabschnitten in der ersten Region bzw. der zweiten Region wiederholt auf die gleiche Weise gebildet sind.

3. Strahlungskühlfilm nach Anspruch 1 oder 2,
wobei die erste und die zweite Wellenlängenumwandlungsschicht (1st und 2n WCL) auf einer zweiten Oberfläche der Basisschicht (BL) gebildet sind.

4. Strahlungskühlfilm nach Anspruch 1 oder 2,
wobei die erste und die zweite Wellenlängenumwandlungsschicht (1st und 2nd WCL) auf der ersten Oberfläche der Basisschicht (BL) gebildet sind.

5. Strahlungskühlfilm nach einem der vorhergehenden Ansprüche,
wobei die in der ersten Region gebildete Wärmebarriereschicht (HBL) eine Mehrzahl von Wärmebarriereabschnitten mit unterschiedlichen Wärmeabschirmungsraten aufweist.

6. Strahlungskühlfilm nach Anspruch 5,
wobei die Wellenlängenumwandlungsabschnitte in den jeweiligen Wärmebarriereabschnitten und der zweiten Region wiederholt auf die gleiche Weise gebildet sind.

7. Strahlungskühlfilm nach einem der vorhergehenden Ansprüche, wobei:
die erste Region und die zweite Region abwechselnd wiederholt angeordnet sind; und
ein Wellenlängenumwandlungsabschnitt, der zum Abstrahlen der gleichen Wellenlänge ausgebildet ist, in der gesamten ersten Region und zweiten Region nebeneinander angeordnet ist.

8. Wellenlängenumwandlungsvorrichtung (100), die eine variable Wellenlänge bereitstellt, aufweisend:
einen Strahlungskühlfilm (10) nach einem der vorhergehenden Ansprüche; und
eine Antriebseinheit (20) mit zwei Rollen, die zum Aufwickeln beider Enden des Strahlungskühlfilms (10) ausgebildet sind, einem Motor (22), der zum Ausüben einer Drehkraft auf mindestens eine der Rollen ausgebildet ist, sowie einer Steuerung (23), die zum Steuern einer Drehzahl und einer Drehrichtung des Motors (22) ausgebildet ist.

9. Wellenlängenumwandlungssystem, das eine variable Wellenlänge bereitstellt, aufweisend:
eine Wellenlängenumwandlungsvorrichtung (100) gemäß Anspruch 8;
einen in einer Anlage installierten Temperatursensor (200); und
einen Management-Server (300), der dazu ausgebildet ist, die Wellenlängenumwandlungsvorrichtung (100) derart zu steuern, dass Sonnenlicht auf einen der Wellenlängenumwandlungsabschnitte der ersten Region gestrahlt wird, wenn ein von dem Temperatursensor gemessener Wert größer als ein Schwellenwert ist.

10. Wellenlängenumwandlungssystem nach Anspruch 9,
das außerdem eine Kamera (400) aufweist, die dazu ausgebildet ist, in der Anlage zu züchtende Lebewesen zu fotografieren,
wobei der Management-Server (300) ein Analysemodul (310) aufweist, das dazu ausgebildet ist, ein Wachstumsstadium der zu züchtenden Lebewesen auf der Basis von von der Kamera (400) übertragenen Bilddaten zu bestimmen, sowie ein Anzeigemodul (320) aufweist, das dazu ausgebildet ist, auf der Basis des von dem Temperatursensor (200) gemessenen Werts eine von der ersten Region und der zweiten Region zu bestimmen und die Wellenlängenumwandlungsvorrichtung (100) derart zu steuern, dass Sonnenlicht auf einen der Wellenlängenumwandlungsabschnitte der bestimmten Region gestrahlt wird, um je nach dem festgestellten Wachstumsstadium eine erforderliche Wellenlänge auszusenden.

## Revendications

1. Un film de refroidissement radiatif (10) pour fournir une longueur d'onde variable, comprenant :
une couche de base (BL) comprenant une première région dotée d'une couche barrière thermique (HBL) formée sur une première surface de celle-ci et une deuxième région non dotée d'une couche barrière thermique, la couche barrière thermique (HBL) empêchant la chaleur radiante d'être introduite dans la couche de base (BL) ou d'être émise de la couche de base (BL);
une première couche de conversion de longueur d'onde (1st WCL) formée dans la première région de la couche de base (BL), la première couche de conversion de longueur d'onde (1st WCL) comprenant une première pluralité de sections de conversion de longueur d'onde qui sont divisées les unes des autres et ont des caractéristiques de décalage de longueur d'onde différentes; et
une deuxième couche de conversion de longueur d'onde (2nd WCL) formée dans la deuxième région de la couche de base (BL), la deuxième couche de conversion de longueur d'onde (2nd WCL) comprenant une deuxième pluralité de sections de conversion de longueur d'onde qui sont divisées les unes des autres et ont des caractéristiques de décalage de longueur d'onde différentes.

2. Le film de refroidissement radiatif selon la revendication 1, dans lequel les première et deuxième pluralités de sections de conversion de longueur d'onde sont formées de manière répétée de la même manière dans la première région et la deuxième région, respectivement.

3. Le film de refroidissement radiatif selon la revendication 1 ou 2, dans lequel les première et deuxième couches de conversion de longueur d'onde (1st et 2nd WCLs) sont formées sur une deuxième surface de la couche de base (BL).

4. Le film de refroidissement radiatif selon la revendication 1 ou 2, dans lequel les première et deuxième couches de conversion de longueur d'onde (1st et 2nd WCLs) sont formées sur la première surface de la couche de base (BL).

5. Le film de refroidissement radiatif selon l'une quelconque des revendications précédentes, dans lequel la couche barrière thermique (HBL) formée dans la première région comprend une pluralité de sections de barrière thermique ayant des taux de protection thermique différents.

6. Le film de refroidissement radiatif selon la revendication 5, dans lequel les sections de conversion de longueur d'onde sont formées de manière répétée de la même manière dans les sections de barrière thermique respectives et la deuxième région.

7. Le film de refroidissement radiatif selon l'une quelconque des revendications précédentes, dans lequel : la première région et la deuxième région sont disposées de manière alternée et répétée; et une section de conversion de longueur d'onde configurée pour émettre la même longueur d'onde est disposée dans toute la première région et la deuxième région adjacente l'une à l'autre.

8. Un dispositif de conversion de longueur d'onde (100) fournissant une longueur d'onde variable, comprenant :
un film de refroidissement radiatif (10) selon l'une quelconque des revendications précédentes; et
une unité de commande (20) comprenant deux rouleaux configurés pour enrouler les deux extrémités du film de refroidissement radiatif (10), un moteur (22) configuré pour appliquer une force de rotation à au moins un des rouleaux, et un contrôleur (23) configuré pour contrôler un RPM et une direction de rotation du moteur (22).

9. Un système de conversion de longueur d'onde fournissant une longueur d'onde variable, comprenant :
un dispositif de conversion de longueur d'onde (100) selon la revendication 8;
un capteur de température (200) installé dans une installation; et
un serveur de gestion (300) configuré pour contrôler le dispositif de conversion de longueur d'onde (100) de sorte que la lumière du soleil soit irradiée vers l'une des sections de conversion de longueur d'onde de la première région lorsque la valeur mesurée par le capteur de température est supérieure à une valeur seuil.

10. Le système de conversion de longueur d'onde selon la revendication 9, comprenant en outre une caméra (400) configurée pour photographier des corps vivants à cultiver dans l'installation, dans lequel le serveur de gestion (300) comprend un module d'analyse (310) configuré pour déterminer un stade de croissance des corps vivants à cultiver en fonction des données d'image transmises par la caméra (400), et un module d'indication (320) configuré pour déterminer l'une des première et deuxième régions en fonction de la valeur mesurée par le capteur de température (200) et pour contrôler le dispositif de conversion de longueur d'onde (100) de sorte que la lumière du soleil soit irradiée vers l'une des sections de conversion de longueur d'onde de la région déterminée afin d'émettre une longueur d'onde nécessaire en fonction du stade de croissance déterminé.
